# DEMANDE DE BREVET EUROPEEN

(11) **EP 1 701 013 A1**
(43) Date de publication de la demande: **13.09.2006**
(21) Numéro de dépôt: 06290375.2
(22) Date de dépôt: 07.03.2006
(51) Int. Cl.: F01N 7/18

(54) **Dispositif de suspension pour ligne d'échappement**

(30) Priorité: 08.03.2005 FR 0502312
(71) Demandeur: CF Gomma Spa, 25050 Passirano (Brescia) (IT)
(72) Inventeur: Petrequin, Marc, 35850 Geveze (FR); Hercouet, Roland, 35310 Breal-sous-Montfort (FR); Guéno, Eric, 35132 Vézin-Le-Coquet (FR)
(74) Mandataire: Breese Derambure Majerowicz

(57) **Abrégé**

La présente invention se rapporte à un dispositif de suspension de ligne d'échappement pour véhicule automobile. Un plot en élastomère (1) comprend une douille élastomère (10) de fixation à la caisse dudit véhicule et une douille élastomère (20) de fixation de la ligne d'échappement, raccordées par deux ponts de matière latéraux (30) de sorte que l'ensemble a une forme de profilé de section elliptique. Selon l'invention, un pont de matière central formant bras en S est interposé entre les douilles (10, 20) pour former moyen de limitation de débattement vertical. Par ailleurs, une bande métallique (50) intégrée au plot en élastomère forme un autre moyen de limitation de débattement vertical.

## Description

La présente invention se rapporte au domaine des organes de type plots destinés à la suspension d'une ligne d'échappement pour véhicule automobile.

Un organe de suspension de ligne d'échappement de véhicule automobile doit pouvoir en même temps filtrer les vibrations de la ligne d'échappement et assurer la maîtrise des mouvements de cette ligne.

Il est connu de suspendre une ligne d'échappement à l'aide de plots en élastomère. Un tel plot comprend généralement entre deux zones d'accrochage deux ponts de matière latéraux adaptés à s'écarter l'un de l'autre. Ce plot peut par exemple être constitué de deux douilles élastomères reliées par des ponts de matière latéraux de sorte que la surface extérieure de l'ensemble a sensiblement une forme d'ellipse, les douilles définissant au niveau de l'une et l'autre des extrémités de l'ellipse des orifices adaptés à accueillir respectivement un moyen de fixation à la caisse du véhicule et un moyen de fixation de la ligne d'échappement. Les moyens de fixation insérés dans les orifices du plot sont généralement des pièces métalliques. Un tel plot a une raideur calculée en fonction des impératifs de la suspension et notamment le filtrage des vibrations de la ligne d'échappement tout en la portant et en assurant une maîtrise des débattements de cette ligne.

Selon le niveau de technicité requis, le plot doit pouvoir permettre une limitation en déplacement de la ligne vers le haut ainsi que, dans des cas d'efforts importants à passer, une limitation en déplacement vers le bas.

En l'état de la technique, des solutions sont proposées pour ces fonctions. Généralement, la limitation en compression se fait au moyen de butées ménagées sur le plot avec, par exemple, une butée centrale et des butées supérieure et inférieure ménagées de part et d'autre de la butée centrale et adaptées à venir en contact avec cette butée centrale lorsque le plot a atteint un certain niveau de compression. Quant à la limitation en traction, elle se fait généralement au moyen d'une sangle textile entourant le plot en élastomère. Une telle sangle peut être cousue et introduite dans une rainure prévue à cet effet dans le plot de suspension.

Les solutions proposées en l'état de la technique, qu'il s'agisse des butées de limitation de compression ou de la sangle de limitation de traction, présentent l'inconvénient d'opérer une limitation brusque de la traction et de la compression. Des efforts importants sont donc générés et ces efforts peuvent endommager les pièces métalliques qui sont raccordées au plot. La sangle textile peut notamment générer des efforts suffisamment importants pour entraîner des ruptures de ligne.

Par ailleurs, en ce qui concerne les butées de limitation en compression, il est nécessaire qu'elles soient en regard les unes des autres afin d'exercer leur fonction de limitation. Si le plot est trop déformé dans une direction longitudinale ou transversale, ces butées peuvent se trouver décalées les unes par rapport aux autres et ne pas entrer en contact lorsque le plot a atteint la limite de compression. Ces butées ne peuvent donc fonctionner que dans une plage de débattement limitée dans les directions longitudinales et transversales.

La présente invention entend remédier aux inconvénients de l'art antérieur en proposant un plot de suspension amélioré.

Pour ce faire, la présente invention consiste en un dispositif de suspension de ligne d'échappement pour véhicule automobile, comprenant un plot en élastomère dont une partie supérieure forme moyen de fixation à la caisse dudit véhicule et une partie inférieure forme moyen de fixation de la ligne d'échappement, lesdites parties supérieure et inférieure étant raccordées par deux ponts de matière latéraux adaptés à s'écarter l'un de l'autre, caractérisé en ce que lesdites parties supérieure et inférieure sont en outre raccordées par un troisième pont de matière adapté à se plier dans un plan longitudinal vertical.

Le troisième pont de matière assure une limitation en débattement vertical du plot en exerçant une force de rappel progressive. La limitation en débattement vertical est assurée sur une large bande de déplacements dans les directions transversales et longitudinales. La géométrie du pont de matière assure que cette limitation ne rajoute qu'une raideur parasite très faible.

Avantageusement, ledit pont de matière est raccordé auxdites parties supérieure et inférieure au niveau d'extrémités longitudinales opposées dudit plot.

Avantageusement, ledit troisième pont de matière a une forme de S.

Selon un autre aspect de la présente invention, ledit dispositif de suspension comprend une bande métallique fixée sur ladite partie supérieure dudit plot, ladite bande formant une boucle adaptée à s'étendre sous la partie inférieure du plot.

Cette bande métallique sert de moyen de limitation de déplacement vers le bas de la ligne d'échappement.

Avantageusement, ladite bande métallique est enrobée d'élastomère raccordé au plot en élastomère.

Selon un autre aspect de la présente invention, lesdits moyens de fixation sont des douilles élastomères.

Alternativement, le moyen de fixation à la caisse du véhicule est une platine métallique enrobée d'élastomère.

Dans ce cas, une bande métallique formant moyen de limitation de déplacement vers le bas de la ligne d'échappement sera avantageusement accrochée à la platine métallique avant enrobage d'élastomère de l'ensemble.

Selon un autre aspect de la présente invention, le troisième pont de matière forme accordeur de fréquence. En jouant sur l'épaisseur de ce pont de matière, on peut caler la fréquence de résonance de ce pont de matière sur la fréquence de résonance des ponts de matières latéraux du plot.

On comprendra mieux l'invention à l'aide de la description, faite ci-après à titre purement explicatif, d'un mode de réalisation de l'invention, en référence aux figures annexées où :
- la figure 1 illustre une vue en perspective d'un dispositif de suspension selon l'invention ;
- la figure 2 illustre une vue en coupe longitudinale d'un plot en élastomère du dispositif de la figure 1 ;
- la figure 3 illustre une vue en perspective d'un dispositif selon une variante de la présente invention ; et
- la figure 4 illustre une platine de fixation et une bande métallique intégrées au dispositif de la figure 3.

Selon l'invention, un dispositif de suspension de ligne d'échappement comprend un plot en élastomère 1 globalement constitué d'un moyen 10 de fixation à la caisse d'un véhicule, d'un moyen 20 de fixation à la ligne d'échappement, de ponts de matière latéraux 30, d'un pont de matière central 40 et d'une bande 50 formant une boucle autour du plot 1.

Les éléments 10 à 40 font partie d'un même bloc élastomère. La bande 50 est constituée d'une bande métallique enrobée d'élastomère raccordé au reste du bloc au niveau d'une jonction supérieure.

Le plot en élastomère est globalement un profilé de section elliptique comprenant des cloisons intérieures 11 et 12 de profil circulaire qui définissent au niveau des parties supérieure et inférieure du profilé de section elliptique deux douilles élastomères constituant les moyens de fixation respectivement 10 et 20. Entre les parois extérieures des parties supérieure et inférieure s'étendent les ponts de matière latéraux 30 qui sont donc deux parois arquées vers l'extérieur s'étendant de part et d'autre d'un plan longitudinal vertical. Lorsqu'un effort tendant à faire se rapprocher les douilles 10 et 20 (compression) est appliqué sur le plot, les deux parois 30 s'arquent vers l'extérieur et s'écartent donc l'une de l'autre. Au contraire, lorsqu'un effort tendant à faire s'éloigner ces douilles l'une de l'autre (traction) est appliqué, les deux parois se redressent et se rapprochent l'une de l'autre.

L'ensemble constitué par les douilles 10 et 20 raccordées par les parois 30 a une raideur donnée, choisie en fonction des impératifs de la suspension de la ligne d'échappement.

Selon l'invention, un troisième pont de matière 40 est interposé entre les douilles 10 et 20. Ce pont de matière a la forme d'un bras qui s'étend, lorsque le dispositif est au repos, dans un plan vertical longitudinal médian.

Dans le mode de réalisation représenté, ce bras a, au repos, une forme de S avec une partie centrale 41 inclinée et deux parties d'extrémité 42 et 43 recourbées de manière à s'étendre sensiblement à la verticale. Les extrémités des parties d'extrémités verticales 42 et 43 sont raccordées aux douilles respectivement 20 et 10, sur la surface extérieure des cloisons intérieures 11 et 12 de ces douilles, au niveau des extrémités longitudinales opposées du plot.

La partie centrale inclinée s'étend presque à l'horizontale, les angles entre les parties d'extrémité recourbées et la partie centrale étant légèrement supérieurs à 90°.

Lorsqu'un effort de compression pure tendant à faire se rapprocher les douilles 10 et 20 l'une de l'autre est appliqué sur le plot 20, il se plie dans ce plan longitudinal vertical, les angles entre les parties d'extrémités recourbées et la partie centrale diminuant. Le bras 40 assure une limitation du déplacement vertical de la ligne d'échappement en exerçant une force de rappel progressive.

Lors d'un déplacement longitudinal de la ligne d'échappement, le bras 40 continue à s'étendre dans le plan longitudinal vertical et reste susceptible de se plier dans ce plan en cas de compression. Lors d'un déplacement transversal de la ligne d'échappement, le bras 40 s'étend dans un plan vertical incliné par rapport au plan longitudinal et est susceptible de se plier dans ce plan en cas de compression. Dans tous les cas, le bras 40 continue à jouer son rôle de limiteur de déplacement.

La forme du bras 40 est telle qu'il ne modifie pas ou peu la raideur du plot pour des déformations du plot correspondant à une zone de fonctionnement normal dans laquelle il n'est pas utile de limiter le débattement vertical du plot. En dehors de cette zone de fonctionnement normal, le bras provoque l'augmentation progressive de la raideur du plot dans la direction verticale en fonction de la déformation de ce dernier.

La bande métallique 50 enrobée d'élastomère raccordée à la partie supérieure du plot 1 forme une boucle autour de ce plot 1. Lorsque la ligne d'échappement est suspendue au plot 1, la boucle 50 entoure la douille inférieure 20 liée à la ligne d'échappement. Cette bande métallique sert de moyen de limitation de déplacement vers le bas de la ligne d'échappement.

Bien entendu, la taille de la boucle est choisie suffisante pour ne pas limiter de manière non souhaitable les déplacements transversaux de la ligne d'échappement.

Par ailleurs, cette taille est prévue pour que la bande ne touche pas la ligne d'échappement lorsque cette dernière se déplace dans une zone de fonctionnement normale dans laquelle il n'est pas souhaitable de limiter son déplacement. Lorsque la ligne d'échappement atteint la limite de cette zone de fonctionnement, elle entre en contact avec la bande métallique. Si la ligne d'échappement est encore sollicitée vers le bas, la bande se déforme en flexion et exerce une résistance au déplacement avec une raideur croissante, jusqu'à atteindre une raideur maximale correspondant à la limite de déformation de la bande.

La bande métallique 50 est intégrée au plot 1 au cours du processus de moulage de ce dernier, de sorte qu'elle se trouve enrobée d'élastomère formant, dans la partie supérieure du plot, une jonction avec ce dernier.

Le plot en élastomère 1, pourvu du bras 40 et de la bande 50, a, dans la direction verticale, une courbe effort/déformation qui, dans une zone de fonctionnement normal, est similaire à celle du plot dépourvu de ces derniers. De part et d'autre de cette zone, cette courbe s'incurve progressivement pour finalement prendre l'allure de la courbe d'un plot pour lequel des moyens limitateurs selon l'état de la technique tels que des butées ou une sangle en textile seraient entrés en action.

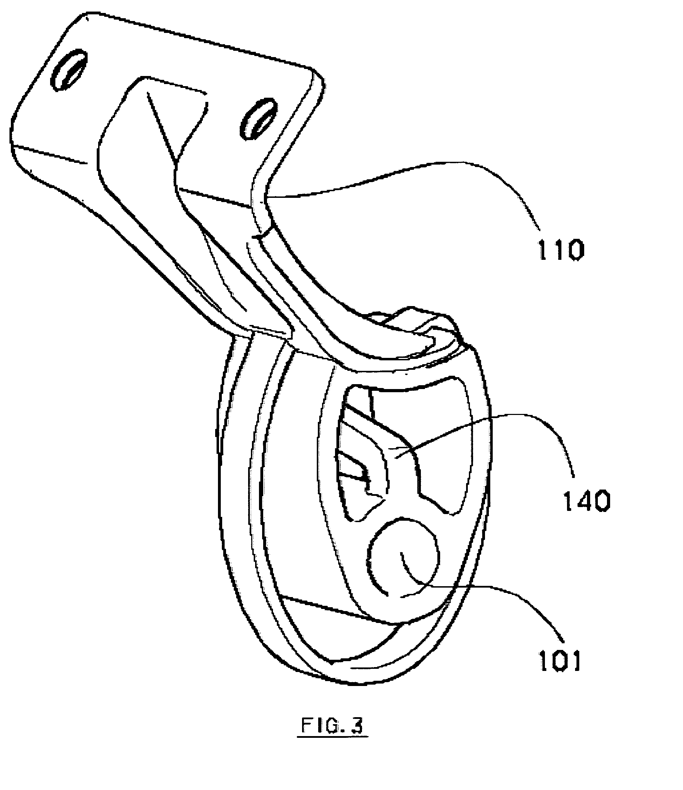

En référence à la figure 3, suivant un autre mode de réalisation de la présente invention, le moyen de fixation à la caisse du véhicule est une platine métallique 110 enrobée d'élastomère.

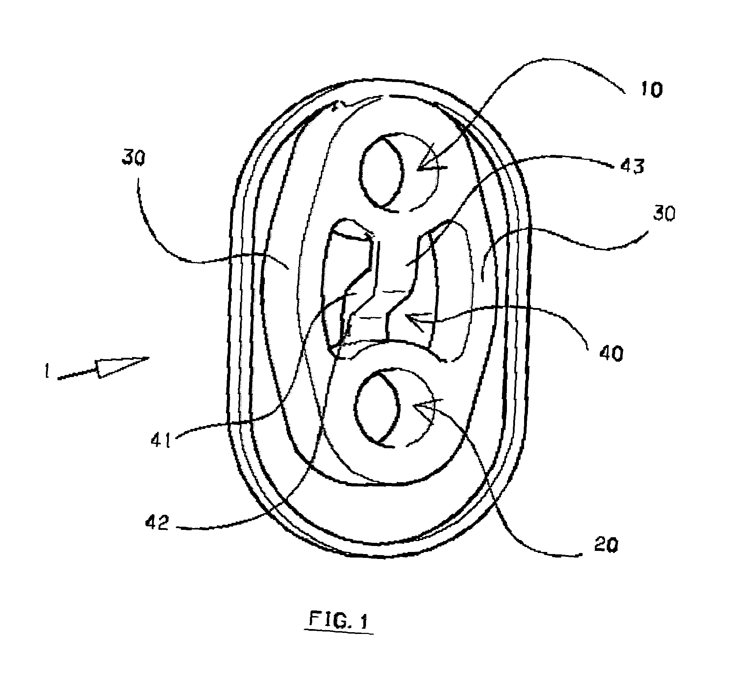

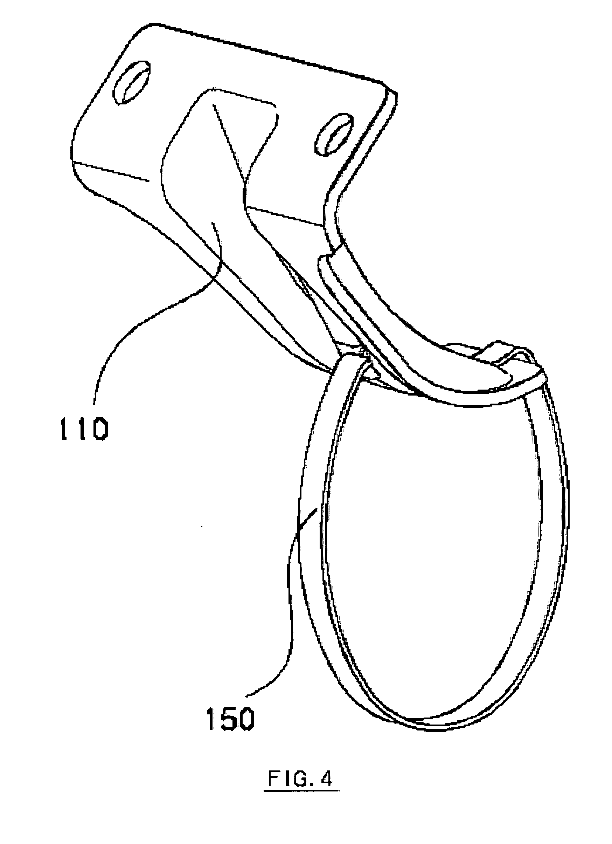

La platine 110 remplace la douille supérieure 10 du plot 1 représenté à la figure 1 et est donc intégrée à un ensemble comprenant un plot 101 correspondant au plot 1 tronqué. En référence à la figure 4, une bande métallique 150 correspondant à la bande 50 formant le moyen de limitation de déplacement vers le bas de la ligne d'échappement sera préalablement accrochée à la platine métallique avant enrobage d'élastomère de l'ensemble et moulage du plot 101.

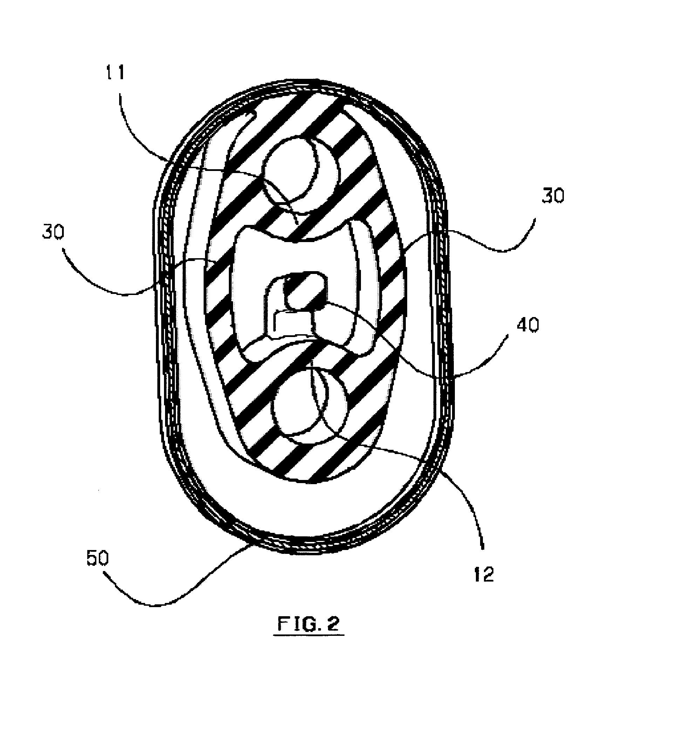

Le bras 40 (figure 1 et 2) ou 140 (figure 3) peut également être utilisé comme accordeur de fréquence. En jouant sur l'épaisseur de ce bras, on peut caler la fréquence de résonance de ce pont de matière sur la fréquence de résonance des parois latérales du plot.

## Revendications

1. Dispositif de suspension de ligne d'échappement pour véhicule automobile, comprenant un plot en élastomère (1, 101) dont une partie supérieure (10, 110) forme moyen de fixation à la caisse dudit véhicule et une partie inférieure (20) forme moyen de fixation de la ligne d'échappement, lesdites parties supérieure et inférieure étant raccordées par deux ponts de matière latéraux (30) adaptés à s'écarter l'un de l'autre, **caractérisé en ce que** lesdites parties supérieure et inférieure sont en outre raccordées par un troisième pont de matière (40, 140) adapté à se plier dans un plan longitudinal vertical, lesdits moyens de fixation, lesdits ponts de matière latéraux et ledit troisième pont de matière faisant partie d'un même bloc élastomère.

2. Dispositif de suspension de ligne d'échappement selon la revendication 1, **caractérisé en ce que** ledit troisième pont de matière (40, 140) est raccordé auxdites partie supérieure et inférieure au niveau d'extrémités longitudinales opposées dudit plot.

3. Dispositif de suspension de ligne d'échappement selon la revendication 2, **caractérisé en ce que** ledit troisième pont de matière (40, 140) a une forme de S.

4. Dispositif de suspension de ligne d'échappement selon l'une quelconque des revendications précédentes, **caractérisé en ce que** ledit dispositif de suspension (1) comprend une bande métallique (50, 150) fixée sur ladite partie supérieure dudit plot, ladite bande formant une boucle adaptée à s'étendre sous ladite partie inférieure (20).

5. Dispositif de suspension de ligne d'échappement selon la revendication 4, **caractérisé en ce que** ladite bande métallique (50,150) est enrobée d'élastomère raccordé au plot en élastomère (1, 101).

6. Dispositif de suspension de ligne d'échappement selon l'une quelconque des revendications précédentes, **caractérisé en ce que**, lesdits moyens de fixation sont des douilles élastomères (10, 20).

7. Dispositif de suspension de ligne d'échappement selon l'une quelconque des revendications précédentes, **caractérisé en ce que** le moyen de fixation à la caisse du véhicule (110) est une platine métallique enrobée d'élastomère.

8. Dispositif de suspension de ligne d'échappement selon l'une quelconque des revendications précédentes, **caractérisé en ce que** ledit troisième pont de matière (40, 140) forme accordeur de fréquence.
